# EUROPÄISCHE PATENTSCHRIFT

(11) **EP 3 139 045 B1**
(45) Veröffentlichungstag und Bekanntmachung des Hinweises auf die Patenterteilung: **18.01.2023**
(21) Anmeldenummer: 16184814.8
(22) Anmeldetag: 18.08.2016
(51) Int. Cl.: F04D 25/04, F04D 27/02, F04D 29/42, F04D 29/44

(54) **VERDICHTER, ABGASTURBOLADER UND BRENNKRAFTMASCHINE**
COMPRESSOR, EXHAUST GAS TURBOCHARGER AND COMBUSTION ENGINE
COMPRESSEUR, TURBOCOMPRESSEUR À GAZ D'ÉCHAPPEMENT ET MOTEUR A COMBUSTION INTERNE

(30) Priorität: 03.09.2015 DE 102015216918
(43) Veröffentlichungstag der Anmeldung: 08.03.2017
(73) Patentinhaber: Volkswagen Aktiengesellschaft, 38440 Wolfsburg (DE)
(72) Erfinder: Alberti, Peter, 38553 Wasbüttel (DE); Hinrichs, Oliver, 31226 Peine (DE); Kammeyer, Jasper, 30169 Hannover (DE); Greiner, Michael, 39116 Magdeburg (DE); Frerichs, Simon, 26655 Westerstede (DE); Werner, Ronny, 01612 Glaubitz (DE); Kleinen, Marcus, 04668 Grimma (DE)

(56) Entgegenhaltungen:
- EP-A1- 0 348 674
- EP-A1- 2 863 064
- WO-A1-2014/128931
- US-A1- 2004 009 061
- US-A1- 2007 269 308
- US-A1- 2015 063 989

## Beschreibung

Die Erfindung betrifft einen Verdichter sowie einen einen solchen Verdichter umfassenden Abgasturbolader und/oder eine einen solchen Verdichter umfassende Brennkraftmaschine.

In einem Verdichter einer Brennkraftmaschine wird das über einen Frischgasstrang einem Verbrennungsmotor der Brennkraftmaschine zugeführte Frischgas verdichtet. Dabei ist die Druckanhebung von der Drehzahl des Laufrads des Verdichters sowie von dem Massenstrom des über das Verdichterlaufrad geführten Frischgases abhängig. In Richtung der Pumpgrenze des Verdichterkennfelds erfolgt die Anströmung der Eintrittskanten der Laufradschaufeln infolge der gegenüber der Umfangsgeschwindigkeit abnehmende Anströmgeschwindigkeit zunehmend druckseitig, d.h. die Inzidenz der Anströmung nimmt stetig zu. Ab einem betriebspunktabhängigen Grenzwert der Inzidenz, der Pumpgrenze, löst die Strömung an den Eintrittskanten ab und die Strömung im Verdichter wird instabil.

Im Kennfeldbereich der Pumpgrenze bildet sich im Bereich der einlassseitigen Gehäusekontur des Verdichters ein Rückströmgebiet impulsarmen Fluids. Diese sogenannte Rückströmblase führt durch Drall- und Mischungsverluste zu einem Abfall des Verdichterwirkungsgrads. Im Bereich der Nabenkontur des Laufrads verläuft aber auch nahe der Pumpgrenze eine impulsreiche und verlustärmere Kernströmung durch den Verdichter, die den Massendurchsatz und den Druckaufbau bestimmt.

Ein Trimsteller, wie er beispielsweise aus der DE 10 2010 026 176 A1 bekannt ist, dient der Verschiebung der Pumpgrenze eines Verdichterkennfelds in Richtung niedrigerer Massenströme bei hohen Druckverhältnissen. Gleichzeitig kann ein Trimsteller im Bereich der Pumpgrenze einen Anstieg des Verdichterwirkungsgrads bewirken. Hierzu umfasst ein Trimsteller eine Vorrichtung, durch die der Anströmquerschnitt, in dem das Laufrad des Verdichters angeströmt wird, veränderbar ist. Durch die so erreichte Düsenwirkung des Trimstellers kann mit zunehmendem Regeleingriff (Verkleinerung des Anströmquerschnitts) die Gasströmung stärker auf den nabennahen Eintrittsquerschnitt des Verdichterlaufrads fokussiert werden. Dadurch strömt weniger Gas in den impulsarmen und verlustbehafteten Bereich der Rückströmblase und die Kernströmung im nabennahen Bereich wird beschleunigt und dadurch zusätzlich stabilisiert. Die Beschleunigung der Gasströmung im nabennahen Bereich des Verdichterlaufrads hat zusätzlich eine saugseitige Verschiebung der Verdichterlaufradanströmung zur Folge, was zu einer weiteren Stabilisierung der Gasströmung beitragen kann. Die Stabilisierung der Kernströmung führt zu der gewünschten Verschiebung der Pumpgrenze des Verdichterkennfelds zu geringeren Massenströmen. Bei nicht gewünschtem Regeleingriff (Trimsteller vollständig geöffnet) wird möglichst der gesamte Querschnitt des Frischgasstrangs vor dem Verdichter freigegeben, so dass in der Anströmung des Verdichterlaufrads keine erheblichen zusätzlichen Reibungs- oder Drosselverluste entstehen. Der Verdichterwirkungsgrad und die Breite des Verdichterkennfelds werden deshalb in Richtung der Stopfgrenze nicht wesentlich negativ durch den Trimsteller beeinflusst.

Der aus der DE 10 2010 026 176 A1 bekannte Trimsteller umfasst einen Konus, der in einer Ausführungsform aus einer Mehrzahl von Lamellen besteht. Die Lamellen sind in zwei Schichten angeordnet, wobei die Lamellen jeder Schicht zueinander beabstandet und die zwei Schichten zueinander rotatorisch versetzt sind, so dass die Lamellen einer Schicht die Abstände zwischen den Lamellen der jeweiligen anderen Schicht überdecken. Mittels eines in längsaxialer Richtung verschiebbaren, die Lamellen außenseitig umgebenden Rings können die den Austrittsquerschnitt des Konus ausbildenden Enden der Lamellen radial verschoben werden. Dadurch verändert sich die Größe des Austrittsquerschnitt und damit des Anströmquerschnitts, in dem das Laufrad des Verdichters angeströmt wird.

Bei heutigen Brennkraftmaschine wird häufig eine Niederdruck-Abgasrückführung (ND-AGR) eingesetzt, um gesetzlich vorgeschriebene Emissionsgrenzwerte zu erreichen. Das stromab einer Turbine eines Abgasturboladers entnommene Abgas wird dabei über eine Zuführung vor dem Verdichter des Abgasturboladers eingeleitet und von diesem mit dem Frischgas angesaugt. Dabei sollte die Einleitung des rückgeführten Abgases möglichst nahe vor dem Verdichter erfolgen, um eine nicht gewünschte Kondensatbildung im Frischgas zu vermeiden oder gering zu halten. Für die Regelung der ND-AGR-Rate wird in die ND-AGR-Einleitung vor dem Verdichtereintritt meist ein Regelventil integriert.

Sowohl die Zuleitung der ND-AGR als auch der Trimsteller sollten funktionsbedingt so dicht wie möglich vor dem Laufrad des Verdichters angeordnet sein, was eine konkurrierende Bauraumsituation zur Folge hat.

Aus der bislang unveröffentlichten deutschen Patentanmeldung 10 2015 209 704.8 ist ein gattungsgemäßer Verdichter bekannt. Bei diesem Verdichter ist innerhalb eines Einlasskanals ein rohrförmiges Strömungsleitelement angeordnet, dessen Längsachse koaxial zu der Rotationsachse des Verdichterlaufrads ausgerichtet ist und durch das der Einlasskanal in einen zentralen Strömungsbereich sowie einen peripheren Strömungsbereich unterteilt wird. Das rohrförmige Strömungsleitelement geht an seinem einlassseitigen Ende in ein ringscheibenförmiges, radial verlaufendes Stützelement über, das unter anderem dazu dient, das Strömungsleitelement innerhalb des Einlasskanals positioniert zu halten. In dem Stützelement sind in gleichmäßiger Teilung eine Mehrzahl von Durchtrittsöffnungen vorgesehen, durch die das Frischgas in den peripheren Strömungsbereich des Einlasskanals strömen kann. Die Durchtrittsöffnungen in dem Stützelement sind mittels einer ringscheibenförmigen Verschlussblende, die korrespondierende Durchtrittsöffnungen aufweist, verschließbar, indem die Verschlussblende relativ zu dem Stützelement verdreht wird, wodurch die Durchtrittsöffnungen in dem Stützelement sowie in der Verschlussblende entweder vollständig, teilweise oder nicht in Überdeckung gebracht werden. Die Einheit aus rohrförmigem Strömungsleitelement, Stützelement und Verschlussblende weist die Funktion eines Trimstellers auf, da mittels dieser in Abhängigkeit von der Verschlussstellung der Verschlussblende die zu dem Verdichterlaufrad strömende Gasströmung vollständig über den zentralen Strömungsbereich und damit auf einen nabennahen Abschnitt des Eintrittsquerschnitts des Verdichterlaufrads oder in einem in Abhängigkeit von der Stellung der Verschlussblende mehr oder weniger großen Verhältnis zusätzlich auch über den peripheren Strömungsbereich auf einen randseitigen Abschnitt des Eintrittsquerschnitts des Verdichterlaufrads geleitet werden kann.

Bei dem Verdichter gemäß der deutschen Patentanmeldung 10 2015 209 704.8 mündet zusätzlich in den peripheren Strömungsbereich und damit stromab des mittels der Verschlussblende mehr oder weniger verschließbaren Stützelements eine Niederdruckabgasrückführung. Vorteilhaft daran ist, dass auf diese Weise sowohl der Trimsteller (die Einheit aus rohrförmigem Strömungsleitelement, Stützelement und Verschlussblende) als auch die Mündung der Niederdruckabgasrückführung in möglichst geringer Distanz zu der Eintrittsebene des Verdichterlaufrads positioniert werden können. Hinzu kommt, dass der Trimsteller zusätzlich die Funktion eines Regelventils für die Niederdruckabgasrückführung übernehmen kann, da durch die Stellung der Verschlussblende die Erzeugung eines Unterdrucks in dem peripheren Strömungsbereich beeinflusst werden kann.

Aus der DE 42 13 047 A1 ist ein Radialverdichter bekannt, bei dem sich die den Einlasskanal ausbildende Gehäusewand stromab der Eintrittsebene des Verdichterlaufrads bis auf einen Durchmesser aufweitet, der größer als der Eintrittsdurchmesser des Verdichterlaufrads ist. Gleichzeitig ist koaxial innerhalb dieses Abschnitts des Einlasskanals ein rohrförmiger Gehäuseabschnitt angeordnet, dessen Innendurchmesser im Wesentlichen dem Eintrittsdurchmesser des Verdichterlaufrads entspricht. Das ringförmige Volumen, das zwischen der aufgeweiteten Gehäusewand und der Außenseite des rohrförmigen Gehäuseabschnitts ausgebildet ist, ist über mehrere Kanäle mit dem das Verdichterlaufrad aufnehmenden Strömungsraum verbunden, wobei diese stromab der Eintrittsebene des Verdichterlaufrads (bezüglich der Hauptströmungsrichtung des Frischgases durch den Verdichter) in den Strömungsraum münden. Durch diese auch als Rezirkulationskanal bekannte Verbindung zwischen dem Einlasskanal und dem Spalt, der zwischen dem Verdichterlaufrad und dem das Verdichterlaufrad radial umgebenden Abschnitt des Gehäuses ausgebildet ist, soll das dort bekanntermaßen rückströmende Frischgas in das als Zirkulationskammer bezeichnete ringförmige Volumen zwischen der aufgeweiteten Gehäusewand und der Außenseite des rohrförmigen Gehäuseabschnitts geleitet werden. Von dort soll dieses rückströmende Frischgas dann stromauf des rohrförmigen Gehäuseabschnitts und damit des Verdichtereintritts in die Hauptströmung überführt werden, wodurch diese eine Einschnürung erfährt, die die Wirkung einer sogenannten kennfeldstabilisierenden Maßnahme aufweist. Verdichter mit Rezirkulationskanälen sind weiterhin aus der US 2007/269308 A1, der EP 0 348 674 A1 und der EP 2 863 064 A1 bekannt geworden.

Aus der WO 2014/128931 A1 und der US 2004/009061 A1 sind Verdichter_mit jeweils einem innerhalb eines Einlasskanals angeordneten, rohrförmigen Strömungsleitelement, das deutlich vor der Eintrittsebene des dazugehörigen Verdichterlaufrads endet, bekannt geworden.

Ein Verdichter mit einem innerhalb eines Einlasskanals angeordneten, rohrförmigen Strömungsleitelement ist zudem in der US 2015/0063989 A1 offenbart.

Ausgehend von diesem Stand der Technik lag der Erfindung die Aufgabe zugrunde, für einen Verdichter auf möglichst einfache und kostengünstige Weise ein möglichst breites Verdichterkennfeld zu erreichen.

Diese Aufgabe wird mittels eines Verdichters gemäß dem Patentanspruch 1 gelöst. Ein Abgasturbolader mit einem solchen Verdichter sowie eine Brennkraftmaschine mit einem solchen Verdichter sind Gegenstände der Patentansprüche 6, und 7 und 8. Vorteilhafte Ausgestaltungen des erfindungsgemäßen Verdichters und damit des erfindungsgemäßen Abgasturboladers und/oder der erfindungsgemäßen Brennkraftmaschine sind Gegenstände der weiteren Patentansprüche und ergeben sich aus der nachfolgenden Beschreibung der Erfindung.

Der Erfindung liegt der Gedanke zugrunde, dass durch die Anordnung eines rohrförmigen Strömungsleitelements innerhalb eines Einlasskanals eines Verdichters, durch das der Einlasskanal in einen zentralen Strömungsbereich, der auf einen nabennahen Abschnitt des Eintrittsquerschnitts des Verdichterlaufrads fokussiert ist, und in einen peripheren Strömungsbereich, der auf einen randseitigen Abschnitt des Eintrittsquerschnitts des Verdichterlaufrads ausgerichtet ist, auch dann ein positiver Effekt auf das Verdichterkennfeld erzielt werden kann, wenn der periphere Strömungsbereich nicht verschließbar ausgebildet ist und somit keine aktive Beeinflussung des Mengenverhältnisses der einerseits über den zentralen Strömungsbereich und andererseits über den peripheren Strömungsbereich geführten Frischgasströmungen möglich ist. Dadurch kann ein solcher Verdichter konstruktiv vergleichsweise einfach und somit kostengünstig ausgebildet werden. Zudem entfällt jeglicher Steuerungs- oder Regelungsaufwand für die Ansteuerung eines Verschlusselements für den peripheren Strömungsbereich. Diesem Grundgedanken der Erfindung liegt die Erkenntnis zu Grunde, dass der positive Effekt hinsichtlich der Lage der Pumpgrenze im Verdichterkennfeld, der mittels eines Trimstellers erreicht werden kann, auch darauf beruht, dass die nabennahe Fokussierung des (relativ geringen) Massenstroms des Frischgases zu einer verringerten oder unterbundenen Vermischung dieser Frischgasströmung mit über den zwischen dem Verdichterlaufrad und dem Gehäuse ausgebildeten Spalt rückströmendem Frischgas führt. Der mit einer solchen Vermischung verbundene Strömungswiderstand kann dadurch verringert oder vermieden werden. Es wurde erkannt, dass dieser Vorteil auch durch ein einfaches rohrförmiges Strömungsleitelement realisiert werden kann und wenn der durch dieses von einem zentralen Strömungsbereich separierte periphere Strömungsbereich nicht verschließbar ist. Dies ist darin begründet, dass bei einem Betrieb des Verdichters mit relativ geringem Massenstrom des Frischgases der in dem peripheren Strömungsbereich durch das rückströmende Frischgas erzeugte Strömungswiderstand so groß ist, dass im Wesentlichen der gesamte Frischgasstrom über den zentralen Strömungsbereich strömt, ohne dass dafür ein aktives Verschließen des peripheren Strömungsbereichs erforderlich wäre. Mit zunehmendem Massenstrom des Frischgases wird dann (selbsttätig) ein zunehmender Anteil des Frischgases auch über den peripheren Strömungsbereich zu dem Eintrittsquerschnitt des Verdichterlaufrads strömen, so dass durch das rohrförmiges Strömungsleitelement keine relevante negative Beeinflussung des maximalen Massendurchsatzes an Frischgas und somit der Lage der Stopfgrenze im dazugehörigen Verdichterkennfeld zu erwarten ist. Dabei kann ein wesentlicher Vorteil gegenüber dem aus der deutschen Patentanmeldung 10 2015 209 704.8 bekannten Trimsteller darin liegen, dass durch die bewusst nicht vorhandene Möglichkeit des Verschließens des peripheren Strömungsbereichs das oder die Befestigungselemente, durch die das rohrförmige Strömungsleitelement innerhalb des Einlasskanals positioniert gehalten ist, möglichst klein dimensioniert werden können, wodurch im entsprechenden Maße der durch diese hervorgerufene Strömungswiderstand gering gehalten werden kann.

Zur Umsetzung dieses Grundgedankens der Erfindung ist ein Verdichter, insbesondere ein Radialverdichter, vorgesehen, der zumindest ein (ein- oder mehrteiliges) Gehäuse und ein Verdichterlaufrad aufweist, wobei das Gehäuse einen Strömungsraum, innerhalb dessen das Verdichterlaufrad drehbar gelagert ist, und einen Einlasskanal, der einen Einlass des Verdichters mit dem Strömungsraum verbindet, ausbildet, wobei der Übergang zwischen dem Strömungsraum und dem Einlasskanal ausschließlich in einer Eintrittsebene des Verdichterlaufrads liegt und wobei ausschließlich in dem Einlasskanal ein (vorzugsweise vollumfänglich geschlossenes) rohrförmiges Strömungsleitelement (mit beliebigem, vorzugsweise jedoch kreisringförmigem Wandquerschnitt) angeordnet ist, durch das zumindest ein Abschnitt des Einlasskanals in einen zentralen Strömungsbereich und einen peripheren Strömungsbereich unterteilt wird. Ein solcher Verdichter ist erfindungsgemäß zum einen dadurch gekennzeichnet, dass der periphere Strömungsbereich nicht (aktiv beziehungsweise veränderlich) verschließbar ausgebildet ist.

Als "Eintrittsebene" des Verdichterlaufrads wird erfindungsgemäß die dem Einlass nächstgelegene, senkrecht zur Rotationsachse des Verdichterlaufrads ausgerichteten Ebene verstanden, die von Laufradschaufeln des Verdichterlaufrads definiert wird, indem zumindest ein punktförmiger Abschnitt eines, mehrerer oder aller der Eintrittskanten dieser Laufradschaufeln innerhalb dieser Ebene angeordnet ist.

Ein erfindungsgemäßer Abgasturbolader umfasst neben einem erfindungsgemäßen Verdichter zumindest noch eine Turbine, die ein in einem Gehäuse drehbar gelagertes Turbinenlaufrad aufweist, wobei das Turbinenlaufrad drehantreibend, insbesondere über eine einfache Welle, mit dem Verdichterlaufrad verbunden ist.

Eine erfindungsgemäße Brennkraftmaschine umfasst zumindest einen Verbrennungsmotor (vorzugsweise Diesel- oder Ottomotor), einen Frischgasstrang, über den Frischgas einem oder mehreren Brennräumen des Verbrennungsmotors zuführbar ist, einen Abgasstrang, über den Abgas, das durch eine Verbrennung eines Gemisches aus den Brennräumen zugeführtem Kraftstoff und Frischgas entstanden ist, abführbar ist, sowie einen in den Frischgasstrang integrierten erfindungsgemäßen Verdichter oder einen erfindungsgemäßen Abgasturbolader, wobei der Verdichter in den Frischgasstrang und die Turbine in den Abgasstrang integriert sind.

Bei einem erfindungsgemäßen Verdichter kann zur Erzielung einer vorteilhaften Anströmung des Verdichterlaufrads vorzugsweise vorgesehen sein, dass die Längsachse des Strömungsleitelements parallel oder (besonders bevorzugt) koaxial zu der Rotationsachse des Verdichterlaufrads angeordnet ist.

Weiterhin bevorzugt kann vorgesehen sein, dass das laufradseitige (d.h. das bezüglich der Eintrittsebene des Verdichterlaufrads proximale) Ende des Strömungsleitelements, das weiterhin bevorzugt eine in einer Ebene, die senkrecht zu der Längsachse ausgerichtet ist, liegende umlaufende Kante aufweist, in einem möglichst kleinen Abstand zu der Eintrittsebene des Verdichterlaufrads angeordnet ist. Auf diese Weise kann eine bestmögliche Separierung der über den zentralen Strömungsbereich geführten Frischgasströmung von dem Frischgas, das über den Spalt zwischen dem Laufrad und dem dieses radial umgebenden Abschnitt des Gehäuses rückgeströmt ist, erreicht werden.

Bei einem erfindungsgemäßen Verdichter können ein oder mehrere Befestigungselemente, durch die das rohrförmiges Strömungsleitelement innerhalb des Einlasskanals positioniert gehalten sind, wegen der fehlenden Integration von Verschlussmitteln vergleichsweise klein dimensioniert werden, wodurch in dem entsprechenden Maße der durch diese verursachte Strömungswiderstand gering gehalten werden kann. Vorzugsweise kann jedoch vorgesehen sein, dass eine zumindest teilweise Kompensation dieses gegebenenfalls geringen jedoch vorhandenen Strömungswiderstands dadurch erreicht wird, dass der Strömungsquerschnitt des Einlasskanals stromab der Eintrittsebene vergleichsweise groß dimensioniert wird. Vorteilhafterweise kann dabei vorgesehen sein, dass diese relativ große Dimensionierung des Strömungsquerschnitts jedoch nicht auch für den Eintrittsquerschnitt (d.h. den von den Eintrittskanten der Laufradschaufeln des Verdichterlaufrads überdeckten Abschnitt der Eintrittsebene) vorgesehen ist. Hierzu ist erfindungsgemäß vorgesehen, dass sich der aufgeweitete Einlasskanal bis zum Erreichen der Eintrittsebene verjüngt, so dass sich die größte und die kleinste und damit auch die mittlere Querschnittsabmessung (insbesondere Durchmesser bei einem kreisringförmigen Querschnitt) des peripheren Strömungsbereichs sowie die größte Querschnittsabmessung (insbesondere Durchmesser bei einem kreisförmigen Querschnitt) des zentralen Strömungsbereichs jeweils ausgehend von dem einlassseitigen Ende bis zum laufradseitigen Ende des Einlasskanals (insgesamt) verkleinert. Dabei ist das Ausmaß der Verkleinerung der größten Querschnittsabmessung des peripheren Strömungsbereichs größer als derjenigen der kleinsten Querschnittsabmessung des peripheren Strömungsbereichs und noch größer als derjenigen des zentralen Strömungsbereichs. Diese Verkleinerung mehrerer Querschnittsabmessungen muss dabei nicht (kann jedoch) konstant und/oder kontinuierlich sein. Besonders bevorzugt kann diese auf denjenigen Abschnitt des Einlassrohrs beschränkt sein, der der Anströmebene direkt benachbart ist. Dabei kann die längsaxiale Erstreckung dieses Abschnitts vorzugsweise vergleichsweise kurz sein. Beispielsweise kann dieser Abschnitt höchstens die Hälfte, vorzugsweise höchstens ein Drittel, weiterhin bevorzugt höchstens ein Viertel und besonders bevorzugt höchstens ein Fünftel der Länge (Erstreckung in Richtung der Längsachse) des rohrförmigen Strömungsleitelements betragen.

Infolge der fehlenden Verschließbarkeit des peripheren Strömungsbereichs entfällt bei einem erfindungsgemäßen Verdichter die Möglichkeit, dafür vorgesehene Verschlussmittel zur gezielten Beeinflussung eines Unterdrucks in dem peripheren Strömungsbereich und damit als Regelungsvorrichtung für eine Niederdruckabgasrückführung zu nutzen. Dementsprechend kann vorzugsweise vorgesehen sein, dass bei dem erfindungsgemäßen Verdichter in den peripheren Strömungsbereich kein Einlass für eine Niederdruckabgasrückführung mündet und bei einer erfindungsgemäßen Brennkraftmaschine keine Niederdruckabgasrückführung vorgesehen ist.

Andererseits kann eine erfindungsgemäße Ausgestaltung eines Verdichters beziehungsweise einer einen solchen Verdichter aufweisenden Brennkraftmaschine auch Vorteile aufweisen, wenn die Brennkraftmaschine eine Niederdruckabgasrückführung und der Verdichter dementsprechend einen Einlass für eine solche Niederdruckabgasrückführung in dem peripheren Strömungsbereich aufweist. Ein wesentlicher Vorteil, der durch die Teilung des Einlasskanals in zumindest einem Abschnitt in einen zentralen und einen peripheren Strömungsbereich erreicht werden kann, liegt dann darin, dass insbesondere bei geringen Massenströmen des Frischgases Strömungsverluste durch eine Vermischung der im Wesentlichen über den zentralen Strömungsbereich geführten Frischgasströmung mit dem in den peripheren Strömungsbereich eingeleiteten rückgeführten Abgas vermieden werden können.

Die Offenbarung betrifft weiterhin ein Kraftfahrzeug, insbesondere ein radbasiertes Kraftfahrzeug (vorzugsweise PKW oder LKW), mit einer erfindungsgemäßen Brennkraftmaschine. Dabei kann die Brennkraftmaschine insbesondere zur (direkten oder indirekten) Bereitstellung der Antriebsleistung für das Kraftfahrzeug vorgesehen sein.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand eines in den Zeichnungen dargestellten Ausführungsbeispiels näher erläutert. In den Zeichnungen zeigt:
- Fig. 1:: in schematischer Darstellung eine erfindungsgemäße Brennkraftmaschine;
- Fig. 2:: einen Längsschnitt durch einen erfindungsgemäßen Verdichter in einer perspektivischen Ansicht; und
- Fig. 3:: den Längsschnitt gemäß der Fig. 2 in einer Seitenansicht.

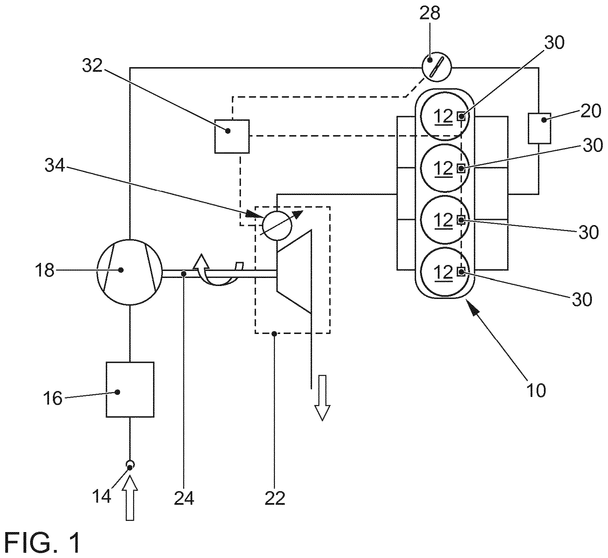

Die Fig. 1 zeigt in schematischer Darstellung eine erfindungsgemäße Brennkraftmaschine mit einem Verbrennungsmotor 10, der eine Mehrzahl von Zylindern 12 ausbildet. Die Zylinder 12 begrenzen gemeinsam mit darin auf und ab geführten Kolben und einem Zylinderkopf (nicht dargestellt) Brennräume, in denen Frischgas (Luft) gemeinsam mit Kraftstoff verbrannt wird. Der Kraftstoff wird dabei, gesteuert durch eine Steuerungsvorrichtung 32 (Motorsteuerung), mittels Injektoren 30 direkt in die Brennräume eingespritzt. Das Verbrennen des Kraftstoff-Frischgas-Gemisches führt zu zyklischen Auf- und Ab-Bewegungen der Kolben, die wiederum in bekannter Weise über nicht dargestellte Pleuel auf eine ebenfalls nicht dargestellte Kurbelwelle übertragen werden, wodurch die Kurbelwelle rotierend angetrieben wird. Das Frischgas wird dem Verbrennungsmotor 10 über einen Frischgasstrang zugeführt und dazu über eine Ansaugmündung 14 aus der Umgebung angesaugt, in einem Luftfilter 16 gereinigt und anschließend in einen erfindungsgemäßen Verdichter 18, der Teil eines erfindungsgemäßen Abgasturboladers ist, geführt. Das Frischgas wird mittels des Verdichters 18 verdichtet, anschließend in einem Ladeluftkühler 20 abgekühlt und den Brennräumen zugeführt. Der Antrieb des Verdichters 18 erfolgt mittels einer Turbine 22 des Abgasturboladers, die in einen Abgasstrang der Brennkraftmaschine integriert ist. Abgas, das bei der Verbrennung des Kraftstoff-Frischgas-Gemisches in den Brennräumen des Verbrennungsmotors 10 entsteht, wird über den Abgasstrang aus dem Verbrennungsmotor 10 abgeführt und durchströmt dabei die Turbine 22. Dies führt in bekannter Weise zu einem rotierenden Antrieb eines Turbinenlaufrads (nicht dargestellt), das über eine Welle 24 drehfest mit einem Verdichterlaufrad 26 (in der Fig. 1 nicht dargestellt) des Verdichters 18 verbunden ist. Der rotierende Antrieb des Turbinenlaufrads wird somit auf das Verdichterlaufrad 26 übertragen.

Um im Betrieb des Verbrennungsmotors 10 mit unterschiedlicher Last und unterschiedlichen Drehzahlen eine möglichst optimale Nutzung der Enthalpie des Abgases zur Erzeugung von Verdichtungsleistung mittels des Abgasturboladers realisieren zu können, kann die Turbine 22 des Abgasturboladers optional (insbesondere bei einer Ausgestaltung des Verbrennungsmotors als Dieselmotor) eine mittels der Steuervorrichtung 32 ansteuerbare Vorrichtung zur variablen Turbinenanströmung (VTG) 34 aufweisen. Diese kann in bekannter Weise eine Mehrzahl von in einem Einlass der Turbine 22 angeordnete Leitschaufeln (nicht dargestellt) umfassen, die individuell drehbar ausgebildet sind, wobei diese gemeinsame mittels einer Verstellvorrichtung (nicht dargestellt) verstellbar sind. In Abhängigkeit von den Drehstellungen der Leitschaufeln verengen diese den freien Strömungsquerschnitt in dem Einlass der Turbine mehr oder weniger und beeinflussen zudem den Abschnitt der primären Anströmung des Turbinenlaufrads und die Ausrichtung dieser Anströmung.

Stromab des Verdichters 18 ist in die Ladeluftstrecke, d.h. den Abschnitt des Frischgasstrangs zwischen dem Verdichter 18 und dem Verbrennungsmotor 10, eine ebenfalls mittels der Steuervorrichtung 32 ansteuerbare Regelklappe 28 integriert. Bei einer Ausgestaltung des Verbrennungsmotors 10 als Ottomotor kann es sich bei dieser Regelklappe 28 um eine Drosselklappe (mit bekannter Funktionalität) handeln. Bei einer Ausgestaltung des Verbrennungsmotors 10 als Dieselmotor kann die primäre Funktion der Regelklappe 28 darin bestehen, kurzfristig nach einem Beenden des Betriebs des Dieselmotors die Ladeluftstrecke zu verschließen, wodurch ein Nachströmen von bereits verdichtetem Frischgas in die Brennräume des Dieselmotors vermieden werden kann. Dadurch soll ein ungewolltes Nachlaufen des Dieselmotors infolge von Selbstzündungen von Kraftstoffresten in den Brennräumen im Beisein von nachgeströmtem Frischgas verhindert werden.

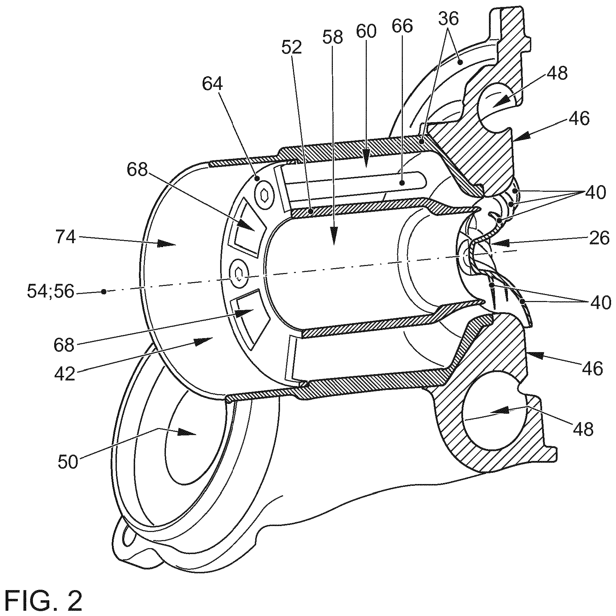

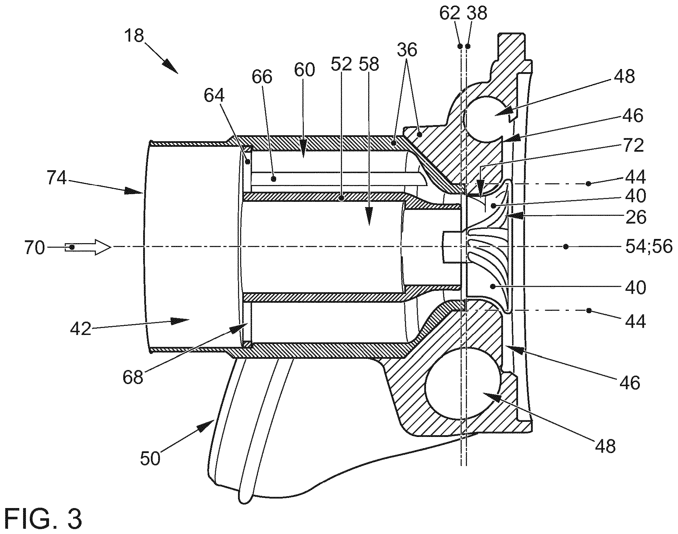

Die Fig. 2 und 3 zeigen in verschiedenen Ansichten einen Längsschnitt durch einen erfindungsgemäßen (Radial-)Verdichter 18, wie er beispielsweise als Teil des erfindungsgemäßen Abgasturboladers in einer Brennkraftmaschine gemäß der Fig. 1 zum Einsatz kommen kann.

Der Verdichter 18 umfasst einen mehrteiliges Gehäuse 36, das ein Teilgehäuse eines Gesamtgehäuses eines Abgasturboladers darstellen kann. Das Gehäuse 36 des Verdichters 18 bildet einen Strömungsraum aus, innerhalb dessen das Verdichterlaufrad 26 drehbar gelagert ist. Einlassseitig ist der Strömungsraum durch eine Eintrittsebene 38 begrenzt, die dadurch definiert ist, dass in dieser die Eintrittskanten sämtlicher Laufradschaufeln 40 des Verdichterlaufrads 26 angeordnet sind. Über einen ebenfalls von dem Gehäuse 36 des Verdichters 18 ausgebildeten Einlasskanal 42 kann Frischgas von einem Einlass 74 des Verdichters 18 zu dem Verdichterlaufrad 26 geführt werden, indem dieses insbesondere durch einen rotierenden Antrieb des Verdichterlaufrads 26 angesaugt wird. Auslassseitig wird der Strömungsraum von einer um Austrittskanten der Laufradschaufeln 40 des Verdichterlaufrads 26 umlaufenden "Austrittsebene" 44 begrenzt. Dort schließt sich ein ebenfalls um die Austrittskanten der Laufradschaufeln 40 des Verdichterlaufrads 26 umlaufender Diffusorraum 46 und daran anschließend die Verdichtervolute 48 an. Aus der Verdichtervolute 48 geht der Verdichterauslass 50 ab. Auf der den Eintrittskanten der Laufradschaufeln 40 abgewandten Seite des Verdichterlaufrads 26 ist eine in den Fig. 2 und 3 nicht dargestellte Abdeckung, die einen Teil des Gehäuses 36 des Verdichters darstellt, vorgesehen, durch den der Strömungsraum, der Diffusorraum 46 und die Verdichtervolute 48 entsprechend begrenzt werden. In dieser Abdeckung ist auch eine Durchgangsöffnung vorgesehen, durch die sich eine Welle (nicht dargestellt), die mit dem Verdichterlaufrad 26 drehfest verbunden ist, erstrecken kann.

Innerhalb des Einlasskanals 42 ist ein rohrförmiges Strömungsleitelement 52 mit kreisringförmigem Wandquerschnitt angeordnet, wobei die Längsachse 54 koaxial bezüglich der Rotationsachse 56 des Verdichterlaufrads angeordnet ist. Das Strömungsleitelement 52 unterteilt den dieses aufnehmenden Abschnitt des Einlasskanals 42 in einen zentralen Strömungsbereich 58, der auf einen nabennahen Abschnitt des Eintrittsquerschnitts des Verdichterlaufrads 26 fokussiert ist, sowie in einen peripheren Strömungsbereich 60, der zwischen der Außenseite des Strömungsleitelements 52 und der Innenseite der den entsprechenden Abschnitt des Einlasskanals 42 begrenzenden Gehäusewand ausgebildet ist. Das laufradseitige Ende des Strömungsleitelements 52 wird von einer umlaufenden Kante gebildet, die in einer senkrecht zu der Längsachse 54 des Strömungsleitelements 52 beziehungsweise der Rotationsachse 56 des Verdichterlaufrads 26 ausgerichteten Ebene 62 gelegen ist. Diese Ebene 62 ist in einem möglichst kleinen Abstand zu der Eintrittsebene 38 des Verdichterlaufrads 26 angeordnet, wobei ein sehr geringer jedoch ausreichender Abstand vorgesehen ist, um trotz möglicher Form-und Lagetoleranzen der relevanten Bauteile sowie trotz der für den Betrieb des Verdichters 26 zu erwartenden thermisch bedingten Dehnungen stets einen Kontakt des laufradseitigen Endes des Strömungsleitelements 52 mit den Eintrittskanten des Verdichterlaufrads 26 zu vermeiden.

Das Strömungsleitelement 52 ist mittels eines als Befestigungselement dienenden, radial verlaufenden, ringscheibenförmigen Stützelements 64 zentral innerhalb des Einlasskanals 42 positioniert gehalten. Dieses Stützelement 64 ist an dem einlassseitigen Ende des Strömungsleitelements 52 befestigt (oder einstückig mit diesem ausgebildet) und liegt außenseitig vollumfänglich an einem Abschnitt der den Einlasskanal 42 begrenzenden Gehäusewand an. Eine Fixierung der Einheit aus Strömungsleitelement 52 und Stützelement 64 erfolgt mittels einer Mehrzahl von parallel zu der Längsachse 54 des Strömungsleitelements 52 verlaufenden Zugankern 66, deren Köpfe an dem Stützelement 64 abgestützt sind und die in entsprechende Gewindebohrungen in einem dem Verdichterlaufrad 26 nahe gelegenen Abschnitt des Gehäuses 36 eingeschraubt sind. Als Widerlager für die auf Zug erfolgende Belastung des Stützelements 64 mittels der Zuganker 66 wirkt ein umlaufender Absatz 68 innerhalb der den Einlasskanal 42 begrenzenden Gehäusewand. In das Stützelement 64 sind überall dort, wo keine Köpfe von Zugankern 66 abgestützt sind, möglichst groß dimensionierte Durchgangsöffnungen 68 vorgesehen, die ein Überströmen von Frischgas aus dem stromab bezüglich der Hauptströmungsrichtung 70 des Frischgases gelegenen Abschnitt des Einlasskanals 42 in den peripheren Strömungsbereich 60 ermöglichen.

Da die geschlossenen Abschnitte des Stützelements 64 einen nicht unerheblichen Strömungswiderstand für die Frischgasströmung darstellen, ist vorgesehen, dass der Einlasskanal 42 bis kurz vor der Eintrittsebene 38 des Verdichterlaufrads 26 einen Durchmesser aufweist, der deutlich größer als der Durchmesser des Eintrittsquerschnitts des Verdichterlaufrads ist. Diese relativ große Dimensionierung des Einlasskanals 42 kann dazu beitragen, Strömungsverluste, die durch insbesondere das Stützelement 64 erzeugt werden, zumindest teilweise zu kompensieren. In einem vergleichsweise kurzen Abschnitt des Einlasskanals 42 direkt stromab der Eintrittsebene 38 des Verdichterlaufrads 26 verjüngt sich der Einlasskanal 42, wobei sich dabei sowohl der größte Durchmesser des peripheren Strömungsbereichs 60 (dieser entspricht dem Durchmesser der den Einlasskanal dort insgesamt begrenzenden Gehäusewand), der kleinste Durchmesser des peripheren Strömungsbereichs 60 (und insgesamt somit auch der mittlere Durchmesser des peripheren Abschnitts) und zudem auch der größte Durchmesser des zentralen Strömungsbereichs 58 kontinuierlich verkleinert. Die Verkleinerung des größten Durchmessers des peripheren Strömungsbereichs 60 ist dabei mit Abstand am größten, gefolgt von der Verkleinerung des kleinsten Durchmessers des peripheren Strömungsbereichs 60. Die Verkleinerung des größten Durchmessers des zentralen Strömungsbereichs 58 ist dagegen am kleinsten. Daraus ergibt sich, dass für den zentralen Strömungsbereich 58 keine erhebliche Einschnürung der darüber geführten Frischgasströmung vorgesehen ist, während der periphere Strömungsbereich 60 bis zur Mündung in den Strömungsraum im Bereich der Eintrittsebene 38 erheblich verjüngt wird.

Im Betrieb des Verdichters 18 kann eine Rückströmung von bereits verdichtetem Frischgas von dem Diffusorraum 46 über den umlaufenden Spalt 72, der zwischen dem Verdichterlaufrad 26 und dem Gehäuse 36 ausgebildet ist, bis in den Einlasskanal 42 erfolgen. Das Strömungsleitelement 52 verhindert dabei, dass sich dieses rückströmende Frischgas mit der über den zentralen Strömungsbereich 85 in das Verdichterlaufrad 26 einströmenden Frischgasströmung im relevanten Ausmaß vermischt, wodurch ein dadurch bedingter Strömungswiderstand für die Frischgasströmung in Hauptströmungsrichtung 70 vermieden werden kann. Dies wirkt sich positiv auf den Wirkungsgrad des Verdichters 18 aus. Das in den peripheren Strömungsbereich 60 rückströmende Frischgas verhindert gleichzeitig ein Durchströmen des peripheren Strömungsbereichs durch einen Teil des in Hauptströmungsrichtung 70 strömenden Frischgases, wenn infolge einer relativ geringen Betriebsdrehzahl des Verdichterlaufrads 26 lediglich ein geringer Massendurchsatz von Frischgas durch den Verdichter 18 gegeben ist. Dies führt dazu, dass in einem solchen Betriebszustand des Verdichters 18 im Wesentlichen der gesamte Massenstrom an in Hauptströmungsrichtung 70 strömendem Frischgas über den zentralen Strömungsbereich 58 geführt und so auf einen nabennahen Abschnitt des Eintrittsquerschnitts des Verdichterlaufrads 26 fokussiert wird. Dies führt in bekannter Weise zu einem positiven Verschieben der Pumpgrenze hin zu relativ geringen Massenströmen in dem dazugehörigen Verdichterkennfeld im Vergleich zu einem entsprechenden Verdichter, der jedoch nicht erfindungsgemäß ausgestaltet ist. Wird dagegen das Verdichterlaufrad 26 mit relativ hohen Drehzahlen angetrieben, führt dies zu einem relativ großen Massendurchsatz durch den Verdichter 18, wodurch in zunehmendem Maße ein Teil des in Hauptströmungsrichtung 70 strömenden Frischgases auch über den peripheren Strömungsbereich 60 geführt wird, so dass dann der im Wesentlichen gesamte Eintrittsquerschnitt des Verdichterlaufrads 26 für die Anströmung genutzt wird. Demnach muss die erfindungsgemäße Ausgestaltung des Verdichters 18 keinen relevanten negativen Effekt auf den rechten Bereich des Verdichterkennfelds und die dortige Lage der Stopfgrenze haben.

Durch die relativ starke Einschnürung des peripheren Strömungsbereichs 60 kurz vor der Eintrittsebene 38 des Verdichterlaufrads 26 kann weiterhin eine nicht unerhebliche Beschleunigung des über diesen Strömungsbereich 60 geführten, in Hauptströmungsrichtung 70 strömenden Frischgases erreicht werden, was sich ebenfalls positiv auf dem Betrieb und/oder den Wirkungsgrad des Verdichters 18 auswirken kann. Andererseits kann die Verjüngung des peripheren Strömungsbereichs 60, die in der der Hauptströmungsrichtung 70 entgegengesetzten Richtung eine Aufweitung darstellt, zu einer schnellen Entspannung von rückgeströmtem Frischgas beitragen, wodurch dessen Ausbreitung bis in den stromab (bezüglich der Hauptströmungsrichtung 70) des Strömungsleitelements 52 beziehungsweise des Stützelements 64 gelegenen Abschnitt des Einlasskanals 42 verhindert werden kann.

### Bezugszeichenliste

- 10: Verbrennungsmotor
- 12: Zylinder
- 14: Ansaugmündung
- 16: Luftfilter
- 18: Verdichter
- 20: Ladeluftkühler
- 22: Turbine
- 24: Welle
- 26: Verdichterlaufrad
- 28: Regelklappe
- 30: Injektor
- 32: Steuerungsvorrichtung
- 34: Vorrichtung zur variablen Turbinenanströmung
- 36: Gehäuse des Verdichters
- 38: Eintrittsebene des Verdichterlaufrads
- 40: Laufradschaufel
- 42: Einlasskanal
- 44: Austrittsebene
- 46: Diffusorraum
- 48: Verdichtervolute
- 50: Verdichterauslass
- 52: Strömungsleitelement
- 54: Längsachse des Strömungsleitelements
- 56: Rotationsachse des Verdichterlaufrads
- 58: zentraler Strömungsbereich
- 60: peripherer Strömungsbereich
- 62: durch ein Ende des Strömungsleitelements definierte Ebene
- 64: Stützelement
- 66: Zuganker
- 68: Durchgangsöffnung
- 70: Hauptströmungsrichtung des Frischgases
- 72: Spalt zwischen Verdichterlaufrad und Gehäuse
- 74: Einlass des Verdichters

## Patentansprüche

1. Verdichter (18) mit einem Gehäuse (36), das einen Strömungsraum, innerhalb dessen ein Verdichterlaufrad (26) drehbar gelagert ist, und einen Einlasskanal (42), der einen Einlass (74) des Verdichters (18) mit dem Strömungsraum verbindet, ausbildet, wobei der Übergang zwischen dem Strömungsraum und dem Einlasskanal (42) ausschließlich in einer Eintrittsebene (38) des Verdichterlaufrads (26) liegt und wobei ausschließlich in dem Einlasskanal (42) ein rohrförmiges Strömungsleitelement (52) angeordnet ist, durch das zumindest ein Abschnitt des Einlasskanals (42) in einen zentralen Strömungsbereich (58) und einen peripheren Strömungsbereich (60) unterteilt wird, und wobei der periphere Strömungsbereich (60) nicht verschließbar ausgebildet ist, **dadurch gekennzeichnet, dass** sich die größte Querschnittsabmessung und die kleinste Querschnittsabmessung des peripheren Strömungsbereichs (60) sowie die größte Querschnittsabmessung des zentralen Strömungsbereichs (58) ausgehend von dem einlassseitigen Ende bis zum laufradseitigen Ende des Strömungsleitelements (52) jeweils verkleinert, wobei das Ausmaß der Verkleinerung der größten Querschnittsabmessung des peripheren Strömungsbereichs (60) größer als derjenigen der kleinsten Querschnittsabmessung des peripheren Strömungsbereichs (60) und noch größer als derjenigen des zentralen Strömungsbereichs (58) ist.

2. Verdichter (18) gemäß Anspruch 1, **dadurch gekennzeichnet, dass** die Längsachse (54) des Strömungsleitelements (52) parallel oder koaxial zu der Rotationsachse (56) des Verdichterlaufrads (26) ausgerichtet ist.

3. Verdichter (18) gemäß Anspruch 1 oder 2, **dadurch gekennzeichnet, dass** das laufradseitige Ende des Strömungsleitelements (52) in einem möglichst kleinen Abstand zu der Eintrittsebene (38) des Verdichterlaufrads (26) angeordnet ist.

4. Verdichter (18) gemäß einem der vorhergehenden Ansprüche, **dadurch gekennzeichnet, dass** in den peripheren Strömungsbereich (60) kein Einlass für eine Niederdruckabgasrückführung mündet.

5. Verdichter (18) gemäß einem der vorhergehenden Ansprüche, **dadurch gekennzeichnet, dass** dieser als Radialverdichter ausgebildet ist.

6. Abgasturbolader mit einem Verdichter (18) gemäß einem der vorhergehenden Ansprüche und einer Turbine (22), die ein in einem Gehäuse drehbar gelagertes Turbinenlaufrad aufweist, wobei das Turbinenlaufrad drehantreibend mit dem Verdichterlaufrad (26) verbunden ist.

7. Brennkraftmaschine mit einem Verbrennungsmotor (10), einem Frischgasstrang, einem Abgasstrang und einem in den Frischgasstrang integrierten Verdichter (18) gemäß einem der Ansprüche 1 bis 5 oder einem Abgasturbolader gemäß Anspruch 6, wobei der Verdichter (18) in den Frischgasstrang und die Turbine (22) in den Abgasstrang integriert sind.

8. Brennkraftmaschine gemäß Anspruch 7, **dadurch gekennzeichnet, dass** keine Niederdruckabgasrückführung vorgesehen ist.

## Claims

1. A compressor (18) with a housing (36) that forms a flow chamber within which a compressor impeller (26) is rotatably mounted, and an inlet channel (42) which connects an inlet (74) of the compressor (18) to the flow chamber, wherein the transition between the flow chamber and the inlet channel (42) is situated exclusively in an inlet plane (38) of the compressor impeller (26), and wherein a tubular flow guide element (52) by which at least a portion of the inlet channel (42) is sub-divided into a central flow region (58) and a peripheral flow region (60) is arranged exclusively in the inlet channel (42), and wherein the peripheral flow region (60) is designed so as to not be closable, **characterized in that** the largest cross-sectional dimension and the smallest cross-sectional dimension of the peripheral flow region (60), as well as the largest cross-sectional dimension of the central flow region (58), respectively reduce in size starting from the inlet-side end to the impeller-side end of the flow guide element (52), wherein the extent of the reduction of the largest cross-sectional dimension of the peripheral flow region (60) is greater than that of the smallest cross-sectional dimension of the peripheral flow region (60), and even greater than that of the central flow region (58).

2. The compressor (18) according to claim 1, **characterized in that** the longitudinal axis (54) of the flow guide element (52) is oriented in parallel or coaxial with the axis of rotation (56) of the compressor impeller (26).

3. The compressor (18) according to claim 1 or 2, **characterized in that** the impeller-side end of the flow guide element (52) is arranged at the smallest possible distance from the inlet plane (38) of the compressor impeller (26).

4. The compressor (18) according to any one of the preceding claims, **characterized in that** no inlet for a low-pressure exhaust gas recirculation opens into the peripheral flow region (60).

5. The compressor (18) according to any one of the preceding claims, **characterized in that** this is designed as a radial compressor.

6. An exhaust gas turbocharger with a compressor (18) according to any one of the preceding claims and with a turbine (22) having a turbine impeller rotatably mounted in a housing, wherein the turbine impeller is connected so as to be driven in rotation with the compressor impeller (26).

7. An internal combustion engine with a combustion engine (10), a fresh gas line, an exhaust gas line, and a compressor (18) according to any one of claims 1 to 5 integrated into the fresh gas line, or with an exhaust gas turbocharger according to claim 6, wherein the compressor (18) is integrated into the fresh gas line and the turbine (22) is integrated into the exhaust gas line.

8. The internal combustion engine according to claim 7, **characterized in that** no low-pressure exhaust gas recirculation is provided.

## Revendications

1. Compresseur (18) comprenant un boîtier (36), qui forme un espace d'écoulement, à l'intérieur duquel une roue à aubes de compresseur (26) est placée rotative et un canal d'admission (42), qui relie une admission (74) du compresseur (18) à l'espace d'écoulement, dans lequel la transition entre l'espace d'écoulement et le canal d'admission (42) se trouve exclusivement dans un plan d'admission (38) de la roue à aubes de compresseur (26) et dans lequel, exclusivement dans le canal d'admission (42), un élément de guidage d'écoulement tubulaire (52) est disposé, par le biais duquel au moins une section du canal d'admission (42) est divisée en une zone d'écoulement centrale (58) et une zone d'écoulement périphérique (60) et dans lequel la zone d'écoulement périphérique (60) est formée pour ne pas pouvoir être fermée, **caractérisé en ce que** la dimension en coupe transversale la plus grande et la dimension en coupe transversale la plus petite de la zone d'écoulement périphérique (60) ainsi que la dimension en coupe transversale la plus grande de la zone d'écoulement centrale (58) diminuent respectivement en partant de l'extrémité côté admission jusqu'à l'extrémité côté roue à aubes de l'élément de guidage d'écoulement (52), dans lequel la mesure de la diminution de la dimension en coupe transversale la plus grande de la zone d'écoulement périphérique (60) est supérieure à celle de la dimension en coupe transversale la plus petite de la zone d'écoulement périphérique (60) et encore plus grande que celle de la zone d'écoulement centrale (58).

2. Compresseur (18) selon la revendication 1, **caractérisé en ce que** l'axe longitudinal (54) de l'élément de guidage d'écoulement (52) est orienté parallèle ou coaxial à l'axe de rotation (56) de la roue à aubes de compresseur (26).

3. Compresseur (18) selon la revendication 1 ou 2, **caractérisé en ce que** l'extrémité côté roue à aubes de l'élément de guidage d'écoulement (52) est agencé à une distance la plus petite possible par rapport au plan d'admission (38) de la roue à aubes de compresseur (26).

4. Compresseur (18) selon l'une quelconque des revendications précédentes, **caractérisé en ce que** dans la zone d'écoulement périphérique (60) aucune admission ne débouche pour un retour de gaz d'échappement basse pression.

5. Compresseur (18) selon l'une quelconque des revendications précédentes, **caractérisé en ce que** celui-ci est formé comme un compresseur radial.

6. Turbocompresseur à gaz d'échappement comprenant un compresseur (18) selon l'une quelconque des revendications précédentes et une turbine (22), qui présente une roue à aubes de turbine placée rotative dans un boîtier, dans lequel la roue à aubes de turbine est reliée pour un entraînement en rotation avec la roue à aubes de compresseur (26).

7. Moteur à combustion interne comprenant un moteur à combustion (10), une branche de gaz frais, une branche de gaz d'échappement et un compresseur (18) selon l'une quelconque des revendications 1 à 5 intégré dans la branche de gaz frais ou un turbocompresseur à gaz d'échappement selon la revendication 6, dans lequel le compresseur (18) est intégré dans la branche de gaz frais et la turbine (22) dans la branche de gaz d'échappement.

8. Moteur à combustion interne selon la revendication 7,
**caractérisé en ce qu'**aucun retour de gaz d'échappement basse pression n'est prévu.
